# EUROPEAN PATENT APPLICATION

(11) **EP 2 117 279 A1**
(43) Date of publication of application: **11.11.2009**
(21) Application number: 08008426.2
(22) Date of filing: 05.05.2008
(51) Int. Cl.: H04W 88/00

(54) **Method and device for providing system information and communication system comprising such device**

(71) Applicant: Nokia Siemens Networks Oy, 02610 Espoo (FI)
(72) Inventor: Doettling, Martin, 85579 Neubiberg (DE); Faerber, Michael, 82515 Wolfratshausen (DE); Lobinger, Andreas, 83714 Miesbach (DE); Michel, Juergen, 81475 München (DE); Raaf, Bernhard, 82061 Neuried (DE); Viering, Ingo, 81541 München (DE)
(74) Representative: Bruglachner, Thomas E.

(57) **Abstract**

A method and a device are suggested for providing a system information of a first network via system information of a second network. In addition, a communication system comprising such a device is provided.

## Description

The invention relates to a method and to a device for providing system information and to a communication system comprising such a device.

In a mobile communication network mobile terminals are informed about the network's existence in case they are within its range and capable of getting connected to this network. Furthermore, the network broadcasts information for initial and/or paging access. In order to keep mobile terminals attached to the network, the mobile terminals need to receive this broadcast information, thus the broadcast information repeatedly has to be made available to the mobile terminals.

Modern and/or future networks will be able to switch off parts of the network, especially transmitters, to save power and/or interference in low load scenarios.

However, switching of a network or a base station will result in a loss of connection for a mobile terminal attached to said (portion) of the network.

The **problem** to be solved is to overcome the disadvantages described above and in particular to provide an efficient solution for saving energy and/or reduce interference without losing the service provided to the mobile terminal.

This problem is solved according to the features of the independent claims. Further embodiments result from the depending claims.

In order to overcome this problem, a method is suggested for providing a system information of a first (mobile) network via a system information of a second (mobile) network.

This approach efficiently allows keeping a user terminal (mobile terminal, UE) attached to a (mobile) network even if the access network itself is (at least partially) switched off. Hence, in particular an available radio access network can be utilized for conveying necessary system information of another network to the user terminal.

It is noted that network in this approach may comprise any physical or logical network or portion thereof, any radio access technology and/or any network operated by a particular provider.

Advantageously, said system information of the first network and/or of the second network comprises at least one of the following:
- a control channel;
- a broadcast channel;
- a broadcast common control channel.

In an embodiment, the first network and the second network utilize the same and/or different radio access technologies.

In another embodiment, said radio access technology comprises at least one of the following:
- an LTE radio access technology;
- a GSM radio access technology;
- a 3G radio access technology;
- a WiMAX radio access technology;
- a WLAN radio access technology;
- an IMT-A radio access technology.

In a further embodiment, the system information of the first network is provided by a first base station and the system information of the second network is provided by a second base station.

The first and the second base station may be deployed at a common location. They may also be deployed adjacent or remote to one another.

In a next embodiment, the first base station and the second base station are part of a multi-purpose base station.

Such multi-purpose base station may be capable of processing several networks and/or several radio access technologies of one type and/or of different types (by one operator or by more operators).

It is also an embodiment that the first base station or a portion of the first base station is switched off.

As the system information of the first base station is conveyed with system information of the second base station, the first base station may at least temporarily and/or at least partially enter a power-saving mode. In particular, an amplifier of said first base station may be switched to such low energy mode.

Pursuant to another embodiment, the first base station or a portion of the first base station is switched on and/or activated if a terminal requests a service of the first network that in particular cannot or is not to be provided by the second base station.

This may in particular apply if the terminal requests a service that cannot be provided by the second base station due to restrictions of, e.g., the radio access technology. However, it is also possible that the second base station may be capable of processing the request of the terminal, but is in or reaches a condition of high load and thus activates the first base station in order to distribute the traffic.

Furthermore, the second base station may convey the request of the terminal to a base station (or radio access technology or any such interface) that is deemed suitable for processing the particular service requested. In general, the base station processing the service requested by the terminal does not have to be the base station the terminal is deemed to be connected to. In other words, the terminal may request, e.g., a video telephony service which is provided by another base station than the terminal assumes being connected to. Hence, the first base station may decide which base station or access technology to be used to meet the service request issued by the terminal.

The problem stated above is also solved by a device comprising a and/or associated with a processor unit and/or a hard-wired circuit and/or a logic device that is arranged such that the method as described herein is executable on said processor unit.

According to an embodiment, the device is a or is associated with a communication device, in particular a mobile terminal and/or a base station.

The problem stated supra is further solved by a communication system comprising the device as described herein.

Embodiments of the invention are shown and illustrated in the following figures:
- Fig.1: shows a portion of a network scenario comprising a multi-purposes base station with two radio access technology modules, which are both connected to a control unit, wherein the base station is connected via an air interface to user terminals that are associated with different radio access technologies;
- Fig.2: shows a flow chart comprising steps to process in order to allow for saving energy by at least partially switching off a base station.

The approach described herein in particular utilizes system information elements in a radio access network B, available at a current position of a mobile terminal to send information about a network A to the mobile terminal even if network A and network B do not share the same radio access technology.

Hence, a base station and/or an amplifier associated with said network A can be switched off and still mobile terminals may receive information as if they were connected to this network A.

This allows to efficiently operate overlapping networks of similar, identical or of different radio access technologies, in particular during low traffic times.

Information about network A usually acquired by monitoring may be sent in a pre-formatted manner to inform the mobile terminal that monitoring of another network is not required (hence it seems as if the mobile terminal is still connected to network A - which actually may be switched off). Furthermore, the network B may transmit or provide service and data rate capabilities of network A, anticipated by the mobile terminal's geographical allocation and/or based on its capability.

In case the mobile terminal wants to use a service, this service may either be provided by the active network B or - as an alternative - network A will be switched on to process the services requested by the mobile terminal.

To avoid unnecessary loads on the network's B system information channel, network B may establish data channels like a FACH in a WCDMA system, to provide information via containers regarding other network parameters to single terminals, e.g., in a sequential manner.

If network B support MBMS technology and if an available space for information on a BCCH is limited to transport details of other networks, an MBMS channel can be used for MBMS-enabled mobile terminals to provide a bulk of information in a parallel and simultaneous manner to many terminals.

Optional or as an alternative, a receiver at a NodeB (or base station) of network A may be switched off and the handling of the mobile terminals associated with said NodeB is processed by another network, e.g., by network B. This can be achieved in particular by utilizing an intersystem paging channel (PCH).

As another option, one operator or one base station or one access technology may provide a broadcast common control channel (BCCH) to various mobile terminals associated with different networks. It is noted that such network may comprise or be associated with one or more network provider (operator) and/or by radio access technology and/or by base station. An inter-operator BCCH may enable one operator to provide BCCHs for various operators.

As an example, two radio access technologies are referred to a as future radio system (FRS) and current radio system (CRS). However, the terms "future" and "current" are only for differentiation purposes and may not be limited to actual or next technologies.

A radio access technology as LTE (long-term evolution) may be provided as FRS at a multi-purpose base station in addition to GSM as a CRS. Hence, the FRS allows deactivating the CRS portion of the multi-purpose base station and to send the BCCH for the mobile terminals that are connected to the CRS via the LTE's system information.

It is noted that the multi-purpose base station may also be realized as more than one base station of different radio access technologies. The base stations may be located in the immediate vicinity to one another (providing the same or similar coverage to mobile terminals) or they may be located at different spots.

Advantageously, the FRS has (full) CRS coverage. For example, at a lower carrier frequency, the coverage can be achieved at a better reliability. The FRS and the CRS may have a common timing (regarding their respective transmitters and/or receivers) and/or a means to forward the timing to the mobile terminal(s). In addition, CRS and FRS may utilize a common control plane operation.

Preferably, the timing for mobiles is kept attached (or detached) to/from the network for all kinds of accesses. In particular in case of BCCH acquisition (e.g., reading information on that channel) a timing synchronization may already be provided and/or processed. Such timing may even be provided from a different entity or system.

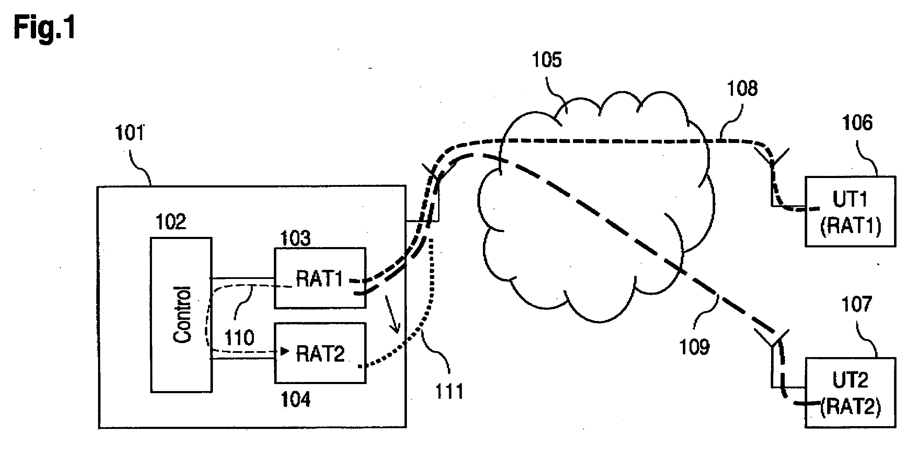

**Fig.1** visualizes a portion of a network scenario comprising a multi-purposes base station 101 with two radio access technology modules RAT1 103 and RAT2 104, which are both connected to a control unit 102. The base station 101 is connected via an air interface 105 to a user terminal UT1 106 which is associated with RAT1 and to a user terminal UT2 107 that is capable of processing RAT2.

It is noted that each terminal 106 or 107 may be capable of processing several (different or same) radio access technologies. It is also noted that the multi-purpose base station can be deployed as several different base stations providing access via radio access technologies from different locations and/or from different physical entities. It is further noted that the radio access technologies mentioned are not limited to the fact that the technologies differ from one another. A first radio access technology may be a particular radio access technology of one operator or provider, a second radio access technology may utilize the same standard, but may be operated by a different provider. A radio access technology hence may be understood as a particular entity or service provided via a power consuming unit that may be a base station, a portion thereof, an amplifier or the like. Hence, switching off said particular entity associated with said radio access technologies allows for a higher power efficiency by consuming less electrical energy.

In the example according to Fig.1, the UT1 106 and the UT2 107 are both associated to the RAT1 module 103 (see connections 108 and 109). This is feasible, because the RAT1 module provides system information for RAT2 via RAT1 system information thereby allowing for switching off the RAT2 module 104. In particular during idle mode, the UT2 107 is supplied with said system information. If the UT2 107 requests a service, e.g., wants to initiate a phone call, this service may be transparently provided by the RAT1 module 103 in this case acting to the UT2 107 as if it were a RAT2 module. However, if the UT2 107 requests a service that cannot be provided by said RAT1 module 103, this can be indicated to the control unit 102, which in return activates (see path 110) the RAT2 module 104 and internally hands over (see dashed line 111) the connection to the UT2 107 from the RAT1 module 103 to the RAT2 module 104. Accordingly, the service requested (e.g., video telephony which RAT1 may not be able to provide) is then supplied by the RAT2 module 104.

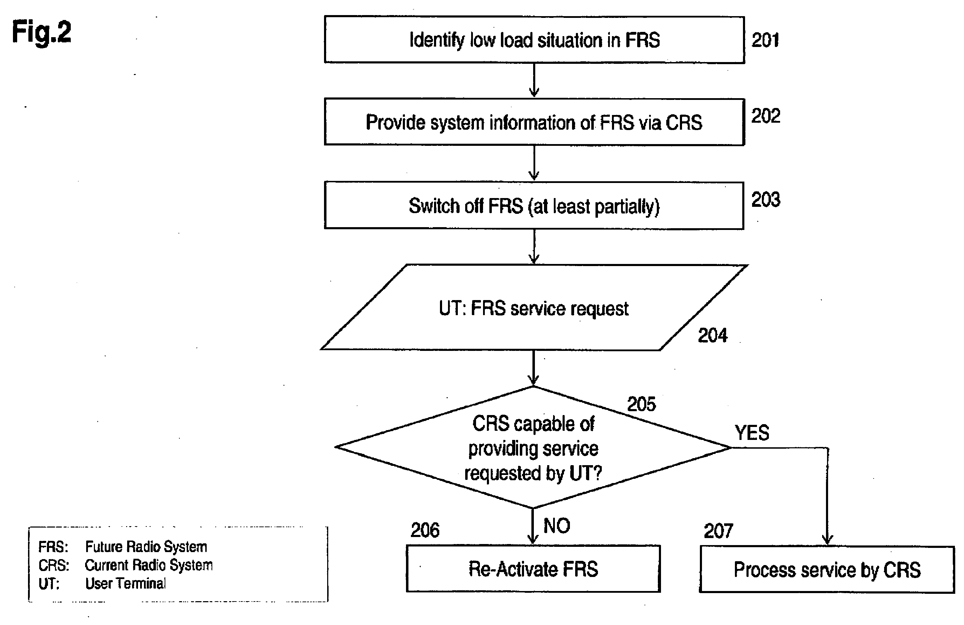

An exemplary scenario of operation as shown in **Fig.2** may comprise the following steps:
a. Identify a low load scenario or situation in the FRS (step 201);
b. Attach a timing for the mobile terminals to the CRS, e.g., intersystem HO messages;
c. Provide system information of FRS via CRS, e.g., intersystem BCCH of FRS to mobile terminals associated with FRS via system information of the CRS (i.e., tunneled through CRS, step 202);
d. Partially switch off the FRS (step 203); preferably maintain the FRS receiver running (keep RACH and PCH on FRS);
e. The user terminal UT may launch a service request towards the FRS (step 204) that cannot be supplied by the CRS. Hence, the FRS may be switched on again (in particular the FRS transmitter); on RACH or PCH operation, switch on FRS completely (steps 205 to 207).

Especially during low traffic periods, at least a portion of at least one base station may be switched off which saves a significant amount of energy.

### Abbreviations

- BCCH: broadcast common control channel
- CRS: current radio system
- FACH: forward access channel
- FRS: future radio system
- LTE: long-term evolution
- MBMS: multimedia broadcast multicast service
- PCH: paging channel (means for the network to signal information to the mobile terminal in idle mode)
- RACH: random access channel (e.g., means for the mobile terminal to signal information to the control plane in an idle mode)
- WCDMA: wideband code division multiple access

## Claims

1. A method for providing a system information of a first network via a system information of a second network.

2. The method according to claim 1, wherein said system information of the first network comprises at least one of the following:
- a control channel;
- a broadcast channel;
- a broadcast common control channel.

3. The method according to any of the preceding claims, wherein said system information of the second network comprises at least one of the following:
- a control channel;
- a broadcast channel;
- a broadcast common control channel.

4. The method according to any of the preceding claims, wherein the first network and the second network utilize the same and/or different radio access technologies.

5. The method of claim 4, wherein said radio access technology comprises at least one of the following:
- an LTE radio access technology;
- a GSM radio access technology;
- a 3G radio access technology;
- a WiMAX radio access technology;
- a WLAN radio access technology;
- an IMT-A radio access technology.

6. The method according to any of the preceding claims, wherein the system information of the first network is provided by a first base station and the system information of the second network is provided by a second base station.

7. The method according to claim 6, wherein the first base station and the second base station are part of a multi-purpose base station.

8. The method according to any of claims 6 or 7, wherein the first base station or a portion of the first base station is switched off.

9. The method according to claim 8, wherein the first base station or a portion of the first base station is switched on if a terminal requests a service of the first network that in particular cannot or is not to be provided by the second base station.

10. A device comprising a and/or associated with a processor unit and/or a hard-wired circuit and/or a logic device that is arranged such that the method according to any of the preceding claims is executable thereon.

11. The device according to claim 10, wherein said device is a or is associated with a communication device, in particular a mobile terminal and/or a base station.

12. Communication system comprising the device according to any of claims 10 or 11.
